# EUROPÄISCHE PATENTSCHRIFT

(11) **EP 2 803 562 B1**
(45) Veröffentlichungstag und Bekanntmachung des Hinweises auf die Patenterteilung: **10.01.2018**
(21) Anmeldenummer: 14168582.6
(22) Anmeldetag: 16.05.2014
(51) Int. Cl.: B62D 53/00, B60P 1/64

(54) **Routenzuganhänger**
Trailer for a trailer train
remorque d'un train à remorque

(30) Priorität: 16.05.2013 DE 102013008546
(43) Veröffentlichungstag der Anmeldung: 19.11.2014
(73) Patentinhaber: Jungheinrich Aktiengesellschaft, 22047 Hamburg (DE)
(72) Erfinder: Badura, Klaus-Peter, 21357 Barum (DE); Ziemann, Jörg, 21149 Hamburg (DE)
(74) Vertreter: Hauck Patentanwaltspartnerschaft mbB

(56) Entgegenhaltungen:
- DE-A1-102005 055 236
- DE-A1-102011 017 346
- DE-U1-202011 000 280

## Beschreibung

Die vorliegende Erfindung betrifft einen Routenzuganhänger mit einem Aufnahmebereich für einen mitzuführenden Wagen. Ferner ist der erfindungsgemäße Routenzuganhänger mit einer Hubeinrichtung ausgestattet, mit der ein in dem Aufnahmebereich befindlicher Wagen anhebbar ist. Die Erfindung betrifft ebenfalls einen Wagen, der in einem Routenzuganhänger mitgeführt werden kann.

Aus DE 603 00 189 T2 ist ein Anhänger für Transportwagen bekannt geworden, der eine Tragkonstruktion zum Transportieren eines Innenwagens aufweist. Der Innenwagen ist in einen E-förmigen Rahmen einschiebbar und wird über einen Riegel in dem Rahmen gesichert. Der Rahmen besitzt eine Anhängerkupplung und kann so als Routenzuganhänger in einem Transportzug mitgeführt werden.

Aus DE 199 58 086 A1 ist ein Transportsystem für eine staplerlose Versorgung bekannt, bei der in einem Aufnahmebereich des Anhängers höhenverstellbare Lasttragmittel angeordnet sind, über die in dem Anhänger mitgeführte Lasten angehoben werden können.

Aus DE 10 2007 032 056 A1 ist ein Anhänger für Flurförderzeuge bekannt geworden, der Rollbehälter in angehobenem Zustand transportieren kann. Der bekannte Anhänger besitzt ein Portaltragwerk, das sich über den Rollbehälter erstreckt.

Aus DE 20 2006 019 637 U1 ist ein selbstlenkendes Anhänger-Zug-System bekannt geworden, bei dem die vorderen und hinteren Räder über eine Achsschenkellenkung spurtreu lenkbar sind. Der portalartig ausgebildete Transportanhänger kann einen zu transportierenden Innenwagen aufnehmen und diesen im angehobenen Zustand mitführen.

Aus DE 20 2011 000 280 U1 ist ein Trailerzugwagen für den Transport von Lasten bekannt geworden, der einen Rahmen mit Fahrwerk und eine Hubeinrichtung zum Anheben und Absenken der Last aufweist. Der Rahmen weist eine in ihrer Höhe verstellbare Trageinrichtung auf, auf der quer zur Fahrtrichtung des Wagens verstellbare Mittel zum Aufsatteln der Last gelagert sind.

Aus DE 10 2011 017 346 A1 ist ein Anhänger für einen Palettenwagen bekannt geworden. Der Anhänger besitzt eine Hubeinrichtung mit anhebbaren Verbindungsmitteln. Die Verbindungsmittel sind hierbei als in Fahrtrichtung sich erstreckende Haken ausgebildet, die eine Zugkraft in dem Routenzug in Fahrzeuglängsrichtung übertragen.

Aus DE 10 2005 055 236 A1 ist ein Transportfahrzeug zum Transport eines Innenwagens bekannt geworden. Das Transportfahrzeug ist als Portalanhänger mit einer Hubeinrichtung ausgebildet, sodass ein anzuhebender Innenwagen auf einem vorstehenden Profil aufschultert.

Der Erfindung liegt die Aufgabe zugrunde, einen Routenzuganhänger bereitzustellen, der einen Transport eines oder mehrerer Innenwagen unterschiedlicher Größe in angehobenem Zustand gestattet.

Erfindungsgemäß wird die Aufgabe durch einen Routenzuganhänger mit den Merkmalen aus Anspruch 1 und durch einen Wagen mit den Merkmalen aus Anspruch 7 gelöst. Vorteilhafte Ausgestaltungen bilden die Gegenstände der Unteransprüche.

Der erfindungsgemäße Routenzuganhänger besitzt einen Aufnahmebereich für einen mitzuführenden Wagen. Der Routenzuganhänger ist ferner mit einer Hubeinrichtung ausgestattet, mit der ein in dem Aufnahmebereich befindlicher Wagen anhebbar ist. Der Aufnahmebereich weist mindestens ein mit der Hubeinrichtung verbundenes Aufnahmeprofil auf, das sich quer zur Anhängerlängsrichtung erstreckt. Im abgesenkten Zustand der Hubeinrichtung ist der Wagen mit einem Halteprofil ein- und von dem Aufnahmeprofil aussschiebbar. Im angehobenen Zustand ist der Wagen mit Hilfe der Hubeinrichtung anhebbar. Erfindungsgemäß erfolgt hierbei die Kraftübertragung zwischen Hubeinrichtung und dem anzuhebenden Wagen über das auf das Aufnahmeprofil geschobene Halteprofil. Der Vorteil der Profilverbindungen liegt darin, dass Wagen einer unterschiedlichen Größe in dem Aufnahmebereich angeordnet und über die Verbindung ihres jeweiligen Halteprofils mit dem Aufnahmeprofil angehoben werden können.

Erfindungsgemäß weist das Aufnahmeprofil eine Nut auf. Die Nut des Aufnahmeprofils ist bevorzugt nach oben hin geöffnet, so dass ein anzuhebender Wagen mit seinem Halteprofil von oben in die Nut des Aufnahmeprofils eingehängt werden kann.

In einer bevorzugten Weiterbildung besitzt der Routenzuganhänger zwei Aufnahmeprofile, die an einander gegenüberliegenden Seiten des Aufnahmebereichs angeordnet sind. Auf diese Weise kann ein sich über die gesamte Breite des Aufnahmebereichs erstreckender Wagen mit zwei Aufnahmeprofilen angehoben werden. Ein Wagen mit einer geringeren Breite als der Aufnahmebereich, kann an dem vorderen oder hinteren Aufnahmeprofil angehoben werden.

In einer zweckmäßigen Weiterbildung ist ein Niederhalter oberhalb der Nut des Aufnahmeprofils angeordnet. Der Niederhalter stellt sicher, dass ein in dem Aufnahmeprofil angeordnetes Halteprofil nicht aus dem Ausnahmeprofil herausspringt, sondern in dem Aufnahmeprofil verbleibt.

In einer bevorzugten Weiterbildung weist das Aufnahmeprofil an einem Ende einen Anschlag auf, an dem das Halteprofil in einem vollständig in den Aufnahmebereich eingeschobenen Zustand anliegt. Der Anschlag ist endseitig an dem Aufnahmeprofil angeordnet, so dass bei einem Einschieben des Wagens in den Aufnahmebereich die Bewegung durch den Anschlag begrenzt wird.

In einer bevorzugten Ausgestaltung erstreckt sich das Aufnahmeprofil über die gesamte Breite des Anhängers. Dies erlaubt einerseits eine gute Unterstützung des in den Aufnahmebereich eingeschobenen Wagens. Zudem können auch Wagen, die sich nicht über die gesamte Breite des Aufnahmebereichs erstrecken, beliebig innerhalb des Aufnahmebereichs an dem Aufnahmeprofil positioniert werden.

In einer bevorzugten Ausgestaltung besitzt der Routenzuganhänger zwei unabhängig voneinander betätigbare Hubeinrichtungen. Bei der Verwendung von Wagen, die sich nicht über die gesamte Breite des Aufnahmebereichs erstrecken, erlauben zwei unabhängig voneinander betätigbare Hubeinrichtungen, dass bei einem bereits angehobenen ersten Wagen der nächste Wagen noch zusätzlich angehoben werden kann.

Die erfindungsgemäße Aufgabe wird ebenfalls durch einen Wagen zur Aufnahme in einem Routenzuganhänger gelöst, der auf Rollen verfahrbar ist und in einem Aufnahmebereich des Routenzuganhängers ein- und aus diesem aus schiebbar ist, wobei ein Halteprofil vorgesehen ist, das in Eingriff mit einem in dem Aufnahmebereich angeordneten Aufnahmeprofil gelangt und über das Aufnahmeprofil angehoben werden kann. Der erfindungsgemäße Wagen kann dabei Abmessungen besitzen, die den Aufnahmebereich des Routenzuganhängers vollständig oder weitgehend vollständig ausfüllen oder die die Möglichkeit bieten, mehrere Wagen in dem Aufnahmebereich anzuordnen. Erfindungsgemäß weist das Halteprofil eine Nut auf, in die das Aufnahmeprofil des Routenzuganhängers bei einem Einschieben des Wagens in den Aufnahmebereich eintaucht. Das Halteprofil des Wagens und das Aufnahmeprofil des Routenzuganhängers gelangen durch Einschieben des Wagens in den Aufnahmebereich des Routenzuganhängers in eine Verbindung, die es erlaubt, den Wagen voll beladen über das Aufnahmeprofil anzuheben.

Bevorzugt weist das Halteprofil mindestens zwei, parallel zueinander angeordnete Halteprofilabschnitte auf, die an einem Ende jeweils die Nut zur Verbindung mit dem Aufnahmeprofil aufweisen. In einer zweckmäßigen Weiterbildung erstreckt sich jeder der Halteprofilabschnitte mindestens über ein Drittel der Wagenbreite.

Eine bevorzugte Ausgestaltung des erfindungsgemäßen Routenzuganhängers und Wagens wird an einem Ausführungsbeispiel näher erläutert. Es zeigen:
- Fign. 1a u. 1b: einen erfindungsgemäßen Portalanhänger mit eingeschobenen Wagen in unterschiedlicher Größe,
- Fig. 2: einen zu transportierenden Wagen in einer perspektivischen Ansicht,
- Fig. 3: einen zu transportierenden Wagen in einer Ansicht aus dem Aufnahmebereich,
- Fig. 4: eine Schnittansicht über die Anbindung eines Wagens,
- Fig. 5: einen zu transportierenden Wagen in einer perspektivischen Ansicht und
- Fig. 6: einen zu transportierenden Wagen in einer Ansicht von der Seite.

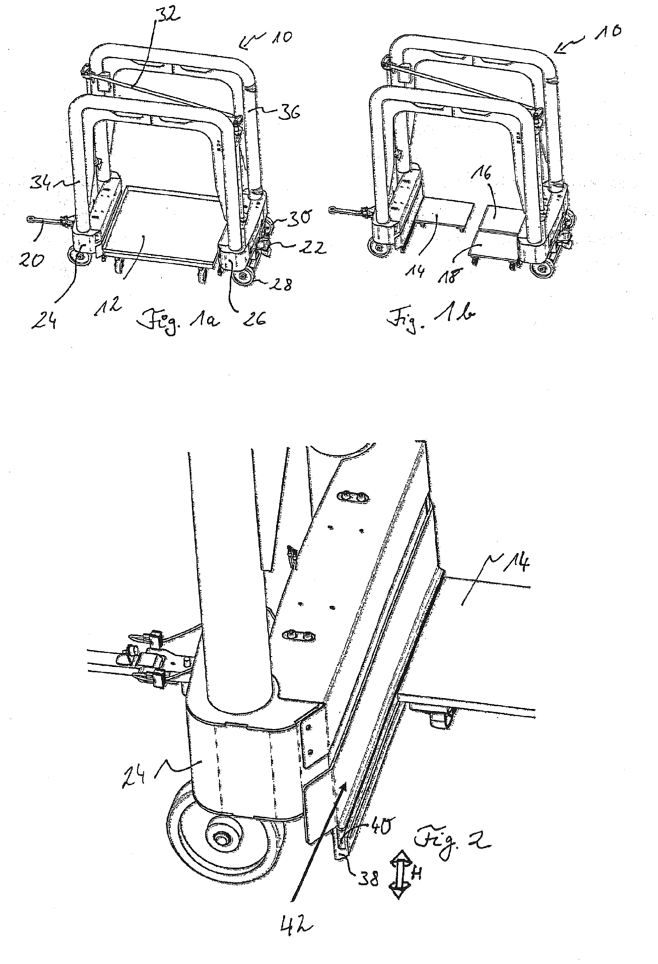

Fign. 1a und 1b zeigen einen portalförmig ausgebildeten Routenzuganhänger als Portalwagen 10, wobei in Fig. 1a ein Wagen 12 aufgenommen ist und in Fig. 1b sich drei Wagen 14, 16, 18 in einem Aufnahmebereich befinden.

Der Portalwagen 10 besitzt an einer Seite eine Schleppdeichsel 20, über die der Portalwagen mit einem schleppenden Fahrzeug verbunden werden kann. Am gegenüberliegenden Ende ist der Portalwagen mit einer Anhängerkupplung 22 ausgestattet, die es erlaubt, weitere Portalwagen zur Bildung eines Routenzuges anzukuppeln. Der Portalwagen 10 besitzt einen vorderen Anhängerabschnitt 24 und einen hinteren Anhängerabschnitt 26. Der vordere Anhängerabschnitt 24 ist ebenso wie der hintere Anhängerabschnitt 26 jeweils auf einem gelenkten Radsatz mit zwei Rädern 28, 30 gelagert. Der Radsatz 28, 30 wird beispielsweise über die Schleppdeichsel 20 gelenkt, wobei eine Lenkkopplung 32 vorgesehen ist, mit der eine Lenkbewegung der Räder an dem vorderen Anhängerabschnitt 24 auf die Räder des hinteren Anhängerabschnitts 26 übertragen wird. Die Anhängerabschnitte 24 und 26 sind über zwei Portalrahmen 34, 36 miteinander verbunden.

Der vordere Anhängerabschnitt 24 und der hintere Anhängerabschnitt 26 begrenzen einen Aufnahmebereich für einen mitzuführenden Wagen. Der Wagen kann hierbei, wie in den Fign. 1a und 1b dargestellt, aus flachen, rollengeführten Platten bestehen. Grundsätzlich ist es auch möglich, dass die Wagen eine oder mehrere Seitenwände besitzen oder als Körbe ausgebildet sind. Der Aufnahmebereich besitzt quer zur Längsrichtung des Anhängers eine Breite, die, wie beispielsweise mit den Wagen 16 und 18 dargestellt, die Anordnung von zwei Wagen nebeneinander gestattet.

Fig. 2 zeigt den vorderen Anhängerabschnitt 24, der mit einem sich über die halbe Breite erstreckenden Wagen 14 verbunden ist. Der Anhängerabschnitt 24 besitzt ein Aufnahmeprofil 38, das mit der Hubeinrichtung des vorderen Anhängerabschnitts 24 verbunden ist. Über die Hubeinrichtung wird das Aufnahmeprofil 38 entlang des Doppelpfeils H in der Höhe verstellt. Das Aufnahmeprofil 38 besitzt eine Nut 40, die nach oben hin offen ist, so dass der Wagen 14 in die Nut 40 eingehängt werden kann. Oberhalb der Nut 40 ist ein Niederhalter 42 vorgesehen, der sicherstellt, dass der in das Aufnahmeprofil eingehängte Wagen 14 beispielsweise bei einer Bodenwelle während der Fahrt nicht aus dem Aufnahmeprofil 38 springt.

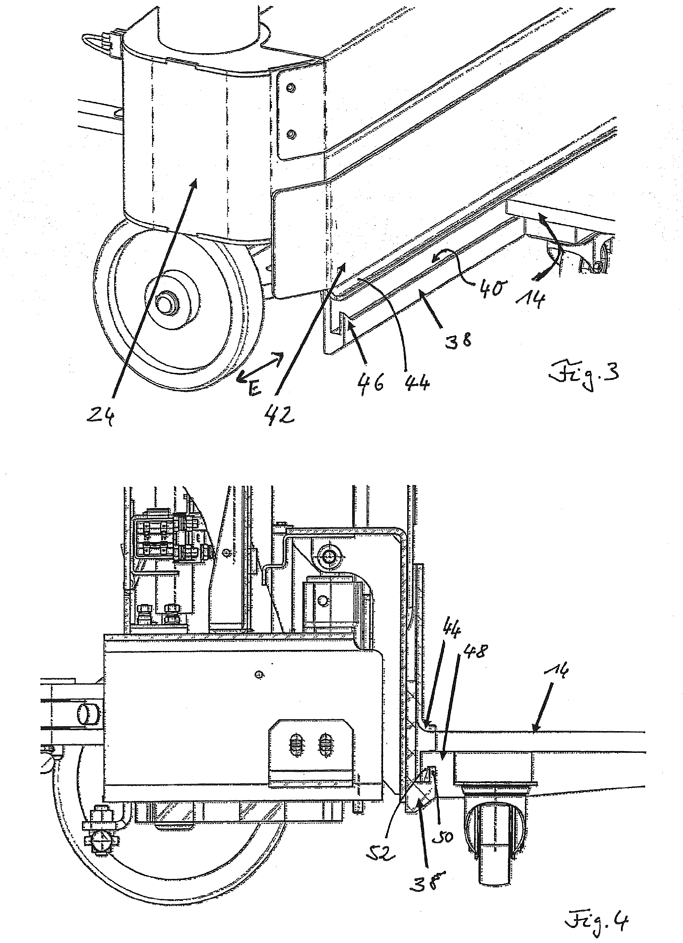

Fig. 3 zeigt den Aufbau des Niederhalters 42 im Detail. Der Niederhalter 42 besteht aus einem an dem Anhängerabschnitt 24 angebrachten Blech, das eine abgewinkelte Kante 44 besitzt. Die abgewinkelte Kante 44 ist oberhalb der Nut 40 des Aufnahmeprofils 38 angeordnet. Das Aufnahmeprofil 38 wird durch die Hubeinrichtung (nicht dargestellt) angehoben, wobei der Niederhalter 42 ausreichend beabstandet von dem Aufnahmeprofil 38 ist. Der über das Aufnahmeprofil 38 anzuhebende Wagen 14 wird in das Aufnahmeprofil in Richtung E eingeschoben. Die Einschubbewegung des Wagens 14 wird durch einen Vorsprung 46 an einem Ende des Aufnahmeprofils begrenzt.

Die Verbindung zwischen Aufnahmeprofil 38 und dem eingeschobenen Wagen wird aus Fig. 4 deutlich. Ein unterhalb des Wagens 14 angeordnetes Halteprofil mit zwei Halteprofilabschnitten 48 besitzt eine zum Boden weisende Nut 50, mit der der Halteprofilabschnitt 48 an dem Aufnahmeprofil 38 befestigt ist. Die Nut 50 des Halteprofilabschnitts 48 wird durch eine Wand 52 seitlich begrenzt, die in die Nut 40 des Aufnahmeprofils 38 eintaucht. Wie in Fig. 4 zu erkennen, steht der Halteprofilabschnitt 48 seitlich über dem Wagen 14 vor.

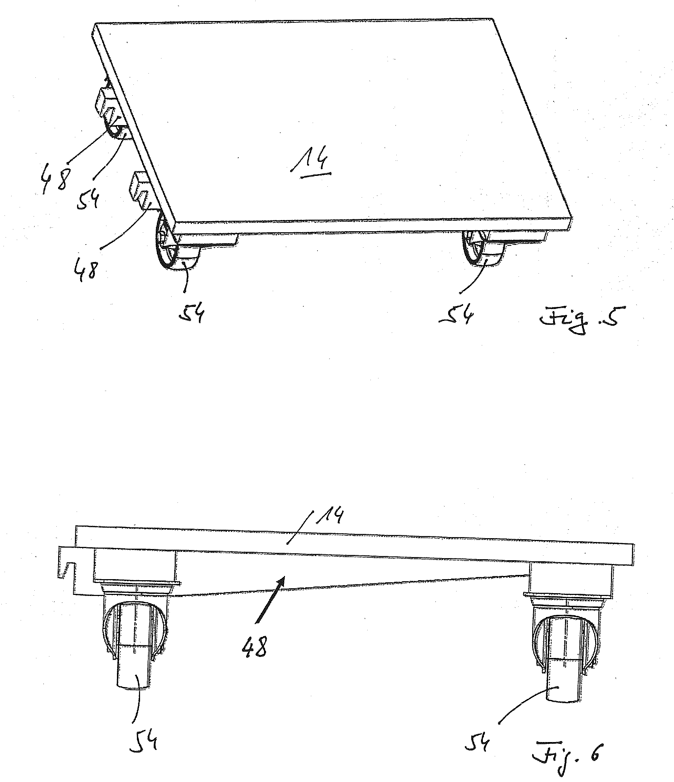

Fig. 5 zeigt den erfindungsgemäßen Wagen mit zwei Halteprofilabschnitten 48. Die Halteprofilabschnitte 48 sind zwischen den Rädern 54 angeordnet. Jeder der Halteprofilabschnitte 48 erstreckt sich dabei im Wesentlichen über die gesamte Breite des Wagens 14. Je nach Dimensionierung des Wagens kann es bereits ausreichen, wenn sich der Halteprofilabschnitt über ein Drittel der Breite des Wagens erstreckt.

## Patentansprüche

1. Routenzuganhänger (19) mit einem Aufnahmebereich für einen mitzuführenden Wagen (18) und eine Hubeinrichtung (26), mit der ein in dem Aufnahmebereich befindlicher Wagen (18) anhebbar ist, **dadurch gekennzeichnet, dass** der Aufnahmebereich quer zur Anhängerlängsrichtung mindestens ein mit der Hubeinrichtung verbundenes Aufnahmeprofil mit einer Nut aufweist, wobei in die Nut bei abgesenkter Hubeinrichtung der Wagen mit einem Halteprofil ein- und ausschiebbar ist und im eingeschobenen Zustand über die Hubeinrichtung angehoben werden kann.

2. Routenzuganhänger nach Anspruch 1, **dadurch gekennzeichnet, dass** zwei Aufnahmeprofile vorgesehen sind, die an gegenüberliegenden Seiten des Aufnahmebereichs angeordnet sind.

3. Routenzuganhänger nach Anspruch 1 oder 2, **dadurch gekennzeichnet, dass** ein Niederhalter oberhalb der Nut des Aufnahmeprofils angeordnet ist.

4. Routenzuganhänger nach einem der Ansprüche 1 bis 3, **dadurch gekennzeichnet, dass** das Aufnahmeprofil an einem Ende einen Anschlag aufweist, an dem das Halteprofil eines vollständig eingeschobenen Wagens anliegt.

5. Routenzuganhänger nach einem der Ansprüche 1 bis 4, **dadurch gekennzeichnet, dass** das Aufnahmeprofil sich über die gesamte Breite des Anhängers erstreckt.

6. Routenzuganhänger nach einem der Ansprüche 1 bis 5, **dadurch gekennzeichnet, dass** zwei unabhängig voneinander betätigbare Hubeinrichtungen an dem Routenzuganhänger vorgesehen sind.

7. Wagen zur Aufnahme in einem Routenzuganhänger, der auf Rollen verfahrbar ist und in einem Aufnahmebereich des Routenzuganhängers ein- und aus diesem ausschiebbar ist, wobei mindestens ein Halteprofil (48) vorgesehen ist, das in Eingriff mit einem in dem Aufnahmebereich angeordneten Aufnahmeprofil (38) gelangt und über das Aufnahmeprofil (38) angehoben werden kann, **dadurch gekennzeichnet, dass** das Halteprofil eine Nut aufweist, in die das Aufnahmeprofil bei einem Einschieben des Wagens in den Aufnahmebereich eintaucht.

8. Wagen nach Anspruch 7, **dadurch gekennzeichnet, dass** das Halteprofil mindestens zwei parallel zueinander angeordnete Halteprofilabschnitte (48) aufweist, die an einem Ende die Nut aufweisen.

9. Wagen nach Anspruch 8, **dadurch gekennzeichnet, dass** jeder der Halteprofilabschnitte sich mindestens über ein Drittel der Wagenbreite erstreckt.

10. System mit einem Routenzuganhänger nach einem der Ansprüche 1 bis 6 und mindestens einem der Ansprüche 7 bis 9.

## Claims

1. A trailer for a lugger train (19) with a pick-up region for a carriage (18) to be carried along and with a lifting device (26), by which the carriage (18) located in the pick-up region can be lifted, **characterised in that** the pick-up region comprises at least one pick-up profile connected to the lifting device crosswise to the long side direction of the trailer and having a groove, wherein when the lifting device is in the lowered condition, the carriage can be inserted into the groove or pushed out of it with a holding profile, and can be lifted in the inserted condition via the lifting device.

2. The trailer for a lugger train according to claim 1, **characterised in that** two pick-up profiles are provided which are arranged at opposite sides of the pick-up region.

3. A trailer for a lugger train according to claim 1 or 2, **characterised in that** a hold-down device is arranged above the groove of the pick-up profile.

4. A trailer for a lugger train according to any one of the claims 1 to 3, **characterised in that** the pick-up profile has a stopper at one end, onto which the holding profile of a completely inserted carriage sits snugly.

5. A trailer for a lugger train according to any one of the claims 1 to 4, **characterised in that** the pick-up profile extends over the entire width of the trailer.

6. A trailer for a lugger train according to any one of the claims 1 to 5, **characterised in that** two lifting devices which can be actuated independently from another are provided in the trailer for a lugger train.

7. A carriage to be accommodated in a trailer for a lugger train, which can be advanced on rollers and can be inserted into and pushed outward from a pick-up region of the trailer for a lugger train, wherein at least one holding profile (48) is provided which arrives in engagement with a pick-up profile (38) arranged in the pick-up region and can be lifted via the pick-up profile (38), **characterised in that** that the holding profile has a groove into which the pick-up profile submerges when the carriage is inserted into the pick-up region.

8. The carriage according to claim 7, **characterised in that** the holding profile comprises at least two holding profile sections (48) arranged in parallel to each other, which have the groove at one end.

9. A carriage according to claim 8, **characterised in that** each one of the holding profile sections extends across at least one third of the carriage's width.

10. A system with a trailer for a lugger train according to any one of the claims 1 to 6, and to at least one of the claims 7 to 9.

## Revendications

1. Remorque d'un train à remorques (19) avec une zone de réception pour un chariot (18) qu'il faut transporter et avec un dispositif de levage (26), par lequel un chariot (18) situé dans la zone de réception peut être levé, **caractérisé en ce que** la zone de réception comporte au moins un profilé de réception relié au dispositif de levage en travers à la direction longitudinale de la remorque et ayant une rainure, chez dispositif de levage abaissé, le chariot pouvant être inséré dans la rainure ou poussé en dehors de celle-ci avec un profilé de retenue, et pouvant être levé dans la condition insérée par le dispositif de levage.

2. Remorque d'un train à remorques selon la revendication 1, **caractérisé en ce que** deux profilés de réception sont prévus qui sont arrangés dans des cotés opposés de la zone de réception.

3. Remorque d'un train à remorques selon la revendication 1 ou 2, **caractérisé en ce qu'**un organe de retenue vers le bas est arrangé au-dessus de la rainure du profilé de réception.

4. Remorque d'un train à remorques selon l'une quelconque des revendications 1 à 3, **caractérisé en ce que** le profilé de réception a une butée dans une extrémité, sur laquelle le profilé de retenue d'un chariot entièrement inséré fait appui.

5. Remorque d'un train à remorques selon l'une quelconque des revendications 1 à 4, **caractérisé en ce que** le profilé de réception s'étend à travers l'entière largeur de la remorque.

6. Remorque d'un train à remorques selon l'une quelconque des revendications 1 à 5, **caractérisé en ce que** deux dispositifs de levage qui se laissent actionner de manière indépendante l'un de l'autre sont prévus dans la remorque d'un train à remorques.

7. Chariot pour être reçu dans une remorque d'un train à remorques, qui peut être avancé sur des rouleaux et peut être inséré dans une zone de réception de la remorque d'un train à remorques et poussé en dehors de celle-ci, au moins un profilé de retenue (48) étant prévue qui arrive en engagement avec un profilé de réception (38) arrangé dans la zone de réception et peut être levé par le profilé de réception (38), **caractérisé en ce que** le profilé de retenue a une rainure dans laquelle le profilé de réception immerge quand le chariot est inséré dans la zone de réception.

8. Chariot selon la revendication 7, **caractérisé en ce que** le profilé de retenue comporte au moins deux sections de profilés de retenue (48) arrangées en parallèle qui ont la rainure dans une extrémité.

9. A chariot selon la revendication 8, **caractérisé en ce que** chacune des sections de profilé de retenue s'étend à travers au moins un tiers de la largeur du chariot.

10. Système avec une remorque d'un train à remorques selon l'une quelconque des revendications 1 à 6, et selon au moins une des revendications 7 à 9.
